Europäisches Patentamt

European Patent Office

Office européen des brevets

(11) Veröffentlichungsnummer: **0 264 621**
**A1**

## EUROPÄISCHE PATENTANMELDUNG

(21) Anmeldenummer: 87113522.4

(22) Anmeldetag: 16.09.87

(51) Int. Cl.⁴: **A01B 49/06**

(30) Priorität: 02.10.86 DE 3633540

(43) Veröffentlichungstag der Anmeldung:
**27.04.88 Patentblatt 88/17**

(84) Benannte Vertragsstaaten:
**AT DE ES FR GB NL**

(71) Anmelder: **Amazonen-Werke H. Dreyer GmbH & Co. KG**
**Am Amazonenwerk 9-13**
**D-4507 Hasbergen-Gaste(DE)**

(72) Erfinder: **Gattermann, Bernd**
**Eichenwall 3**
**D-2872 Hude i.O.(DE)**
Erfinder: **Steenken, Bernhard**
**Waldhöfe 17**
**D-4475 Sögel 2(DE)**

(54) **Landwirtschaftliche Gerätekombination.**

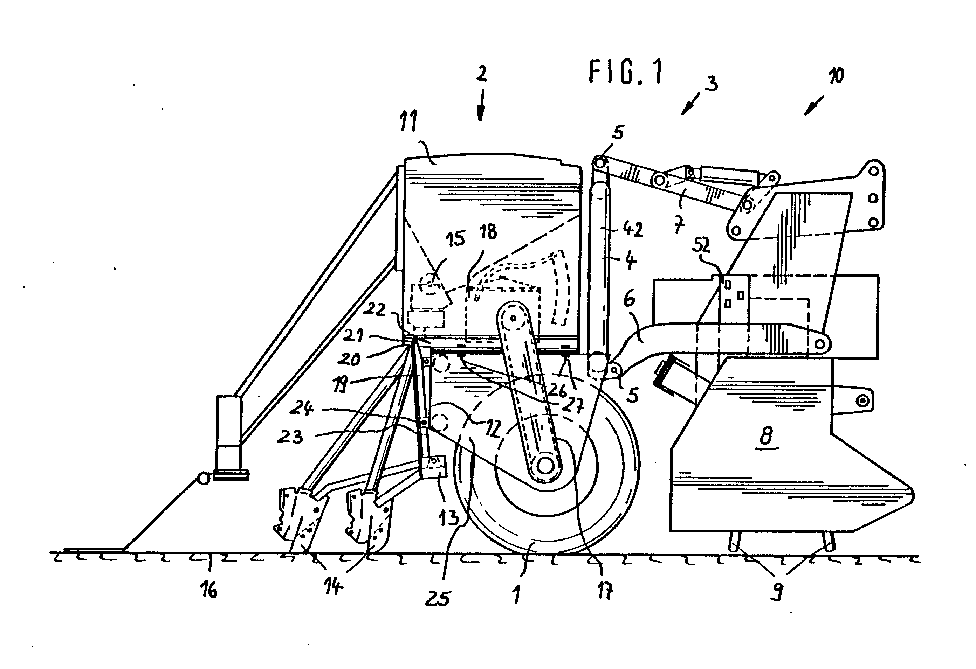

(57) Landwirtschaftliche Gerätekombination, bestehend aus einer Bodenwalze und einer auf der Bodenwalze aufgesattelten Bestellmaschine, wobei die Dosierorgane der Bestellmaschine vorzugsweise von der Bodenwalze über einen regelbaren Antrieb angetrieben werden. Um eine universelle Einsatzmöglichkeiten für die Bodenwalze einer gattungsgemäßen Gerätekombination bei einfachster Handhabung mit einfachsten konstruktiven Maßnahmen zu schaffen, ist vorgesehen, daß die Bestellmaschine (2) mittels leicht lösbarer Kuppelelemente (26,27) abnehmbar auf der Bodenwalze (1) angeordnet ist (Fig. 1).

FIG. 1

EP 0 264 621 A1

## Landwirtschaftliche Gerätekombination

Die Erfindung betrifft eine landwirtschaftliche Gerätekombination gemäß des Oberbegriffes des Patentanspruches 1.

Eine derartige Gerätekombination ist bereits durch die DE-OS 20 01 062 bekannt geworden. Diese, aus einer Ringelwalze und einem Saatkasten mit Dosiereinrichtungen und Saatleitungen bestehende Gerätekombination weist eine kompakte Baueinheit auf, wobei der Saatkasten und die an ihm angeordneten Bauteile fest mit der Ringelwalze verbunden sind. Die Saatleitungen enden oberhalb der Bodenoberfläche und befinden sich in Fahrtrichtung gesehen hinter der Ringelwalze. Die Ringelwalze ersetzt hierbei die Drillschare und bildet Dämme und Furchen, wobei das Saatgut aus den Saatleitungen in den Furchen abgelegt wird. Eine der Ringelwalze nachgeschaltete Zustreichereinrichtung soll die von der Ringelwalze im Ackerboden erzeugten Furchen und Dämme einebnen. Hierdurch wird eine Drillmaschine geschaffen, welche bei geringstmöglichem maschinellen Aufwand eine Saatgutausbringung unter Einhaltung einer innerhalb engster Grenzen gleichbleibende Saattiefe und gleichzeitig eine optimale Flächenverteilung des Saatgutes ermöglicht. Gleichzeitig dient die Ringelwalze der Drillmaschine als Transportfahrwerk, so daß auf die Anbringung besonderer Lauräder verzichtet werden kann.

Der wegabhängige und regelbare Antrieb der Dosierorgane erfolgt bei dieser laufradlosen Drillmaschine von der Ringelwalze über einen Kettentrieb. Der Rahmen der Drillmaschine weist einen Dreipunktanbaubock zum Anbau der Drillmaschine an eine Schlepperhydraulik auf.

Des weiteren ist durch die DE-OS 31 05 641 eine Drillmaschine mit einem Vorratsbehälter und einem Rahmen, der eine mit Säscharen ausgestattete Scharhalteschiene aufweist, bekannt. Bei dieser Drillmaschine kann das Fahrwerk entfernt werden, so daß die Drillmaschine ohne Fahrwerk mit Hilfe von leicht lösbaren Kupplungseinrichtungen mit einer Bodenbearbeitungskombination, bestehend aus einer Bodenbearbeitungsmaschine mit Bodenbearbeitungswerkzeugen und einer hinter den Bodenbearbeitungswerkzeugen angeordneten Bodenwalze, kuppelbar ist. Hierbei sind die unteren Kupplungseinrichtungen zwischen dem Rahmen der Drillmaschine und der Bodenwalze und die oberen Kupplungspunkte zwischen der Drillmaschine und der Bodenbearbeitungsmaschine angeordnet. Der wegabhängige und regelbare Antrieb der Dosierorgane der Drillmaschine erfolgt von einem hinter den Säscharen angeordneten Spurenrad mittels eines Kettentriebes. Diese, auf eine Bodenbearbeitungskombination aufgesattelte Drillmaschine läßt sich bedingt durch ihre Befestigung, nur in dieser zu einer sog. Bestellkombination zusammengefügten Gerätekombination einsetzen. Eine gattungsgemäße landwirtschaftliche Gerätekombination läßt sich mit der Drillmaschinenbefestigung gemäß der DE-OS 31 05 641 nicht herstellen.

Der Erfindung liegt nun die Aufgabe zugrunde, universelle Einsatzmöglichkeiten für die Bodenwalze einer gattungsgemäßen Gerätekombination bei einfachster Handhabung mit einfachsten konstruktiven Maßnahmen zu schaffen.

Diese Aufgabe wird erfindungsgemäß durch das Kennzeichen des Anspruches 1 gelöst. Infolge dieser Maßnahme läßt sich die Bodenwalze in besonders vielfältiger Weise einsetzen. So ist es beispielsweise möglich, die Bodenwalze nach Abnahme der Bestellmaschine als normale Nachlaufwalze hinter einem Bodenbearbeitungsgerät oder mit verschiedenen Bestellmaschinen einzusetzen.

Es ist erfindungsgemäß vorgesehen, daß auf der Bodenwalze mittels leicht lösbarer Kuppelelemente Bestellmaschinen verschiedener Bauart, wie mechanische Getreidesämaschine, Einzelkorndrillmaschine, Kartoffellegemaschine oder pneumatische Getreidesämaschine, etc. anzuordnen sind. Hierbei bildet die Bodenwalze das Fahrwerk für die jeweils angekuppelte Bestellmaschine. Durch das Anordnen der jeweiligen Bestellmaschine auf der Bodenwalze wird in besonders vorteilhafter Weise erreicht, daß der bearbeitete Boden durch die Bodenwalze eine Rückverfestigung erfährt, so daß das Saatgut der jeweiligen Bestellmaschine in einer rückverfestigten Bodenschicht abgelegt wird, wodurch eine spätere Feuchtigkeitsversorgung des abgelegten Saatgutes sichergestellt ist. Hierdurch wird eine wichtige Voraussetzung für einen guten Feldaufgang geschaffen.

Des weiteren ist erfindungsgemäß vorgesehen, daß die Bodenwalze einen Rahmen mit einer Dreipunktkupplung aufweist. Hierbei sieht die Erfindung vor, daß die Bodenwalze mittels der Dreipunktkupplung sowohl an den Dreipunktkrafheber eines Ackerschleppers wie auch hinter einem Bodenbearbeitungsgerät, vorzugsweise einer schlepperzapfwellenangetriebenen Bodenbearbeitungsmaschine ankuppelbar ist. Infolge dieser Maßnahmen läßt sich die Bodenwalze besonders vielseitig einsetzen. Hierbei ist es beispielsweise möglich, die auf einer Bodenwalze befestigte Bestellmaschine über die Dreipunktkupplung der Bodenwalze mit einem Schlepper zu verbinden, hierbei läßt sich die mit der Bodenwalze gekoppelte Bestellmaschine als normale Drillmaschine einsetzen, wobei die Bodenwalze dann das Fahrwerk der Sämaschine bildet. Nach Abnahme der Bestellmaschine von der Bodenwalze läßt sich die Bodenwalze als normale Nachlaufwalze hinter einem Bodenbearbeitungsgerät einsetzen. Weiterhin ist es möglich, die auf die Bodenwalze aufgesetzte Bestellmaschine an ein Bodenbearbeitungsgerät anzukoppeln, wodurch eine sog. Bestellkombination entsteht.

Weiterhin ist erfindungsgemäß vorgesehen, daß der Rahmen der Bodenwalze einen Freiraum für die Durchführung einer Gelenkwelle für ein über die Schlepperzapfwelle anzutreibendes Element, wie ein Gebläse, etc. der auf der Bodenwalze aufgebauten Bestellmaschine, aufweist. Hierdurch läßt sich in einfacher Weise eine Gelenkwelle über die Bodenwalze hinwegführen.

Die erfindungsgemäße Ausführungsform sieht vor, daß die Bodenbearbeitungsmaschine auf ihrer Rückseite Dreipunktkupplungselemente mit einer Höhen-und/oder Tiefeneinstelleinrichtung zur Ankoppelung der Bodenwalze aufweist. Infolge dieser Maßnahme läßt sich die Arbeitstiefe der Bodenbearbeitungswerkzeuge sehr einfach in bezug auf die Bodenoberfläche einstellen, da die Bodenwalze auf der Bodenoberfläche abrollt und somit die jeweils eingestellte Arbeitstiefe der Bodenbearbeitungsmaschine bestimmt.

In einer weiteren Ausführungsform ist erfindungsgemäß vorgesehen, daß in der Antriebseinrichtung zwischen der Bodenwalze und der Bestellmaschine eine Kupplungsungenauigkeiten ausgleichende Schnellkupplung angeordnet ist. Hierdurch wird das Zusammenfügen der an der Bodenwalze und der an der Bestellmaschine angeordneten Antriebsorgane auf einfachste Weise gelöst. Befinden sich die miteinander in Wirkverbindung stehenden Antriebselemente von Bodenwalze und Bestellmaschine in nicht genau fluchtender Position, gleicht diese Schnellkupplung die an der Kupplungsstelle zwischen den einzelnen Bauteilen auftretende Ungenauigkeit auf. Weiterhin sind keine Vorrichtungen beim Antrieb zu lösen, wenn die Bestellmaschine und die Bodenwalze voneinander getrennt werden.

Die erfindungsgemäße. Gestaltung der Kupplungsungenauigkeiten ausgleichenden Schnellkupplung sieht vor, daß diese Schnellkupplung aus zumindest einem Mitnahmestift an der Abtriebswelle des Bodenwalzenantriebes und zumindest einen Abtriebsstift auf der Antriebswelle des regelbaren Antriebes der Dosierorgane der Bestellmaschine besteht. Hierdurch ergibt sich eine äußerst einfache Bauweise der Schnellkupplung.

Weiterhin ist erfindungsgemäß vorgesehen, daß die Abtriebswelle und die Antriebswelle in einem Abstand stirnseitig voneinander und mit ihren Drehachsen zumindest annähernd fluchtend im aufgebauten Zustand der Bestellmaschine auf der Bodenwalze angeordnet sind. Hierbei sieht die Erfindung vor, daß der Mitnahmestift der Abtriebswelle über den Antriebsstift der Antriebswelle die Antriebswelle des regelbaren Antriebes der Dosierorgane antreibt. Hierdurch entsteht eine einfache lösbare, formschlüssige Kupplung.

Die erfindungsgemäße Ausführungsform der Schnellkupplung berücksichtigt weiterhin, daß auf dem Antriebsstift im Bereich des Mitnahmestiftes eine drehbar gelagerte Hülse angeordnet ist, an der der Mitnahmestift zur Anlage kommt. Infolge dieser Maßnahme wird ein verschleißunabfälliger Berührungspunkt zwischen Antriebs-und Mitnahmestift geschaffen.

Es ist weiterhin in erfindungsgemäßer Weise vorgesehen, daß hinter der Bodenwalze über eine Schnellkupplung Tragrahmen mit Materialausbringelementen, wie beispielsweise Säschare verschiedener Bauart, Düngerschare etc. leicht lös- und kuppelbar angeordnet sind. Hierbei ist vorgesehen, daß der Tragrahmen in seinen beiden äußeren Bereichen jeweils einen nach oben ragenden Haltearm aufweist, der an seinem oberen Ende jeweils über eine Schnellkupplung mit dem Rahmen der betreffenden Bestellmaschine und an seinem unteren Ende jeweils über eine Schnellkupplung mit dem Rahmen der Bodenwalze kuppelbar ist, wobei die Schnellkupplungen als Bolzenkupplungen ausgebildet sind. Infolge dieser Maßnahmen läßt sich die Bodenwalze schnell und einfach mit Materialausbringelementen verschiedener Bauart umrüsten oder von der Bodenwalze ab-bzw. anbauen.

Weitere Einzelheiten der Erfindung sind der Beispielsbeschreibung sowie den Zeichnungen zu entnehmen. Hiebei zeigen

Fig. 1 die hinter einem Bodenbearbeitungsgerät angeordnete erfindungsgemäße landwirtschaftliche Gerätekombination in der Seitenansicht,

Fig. 2 eine weitere, hinter einem Bodenbearbeitungsgerät angeordnete erfindungsgemäße landwirtschaftliche Gerätekombination bestehend aus einer Einzelkorndrillmaschine in der Seitenansicht,

Fig. 3 die hinter einem Bodenbearbeitungsgerät als normale Nachlaufwalze eingesetzte Bodenwalze in der Seitenansicht,

Fig. 4 die erfindungsgemäße Bodenwalze in der Ansicht von vorne und

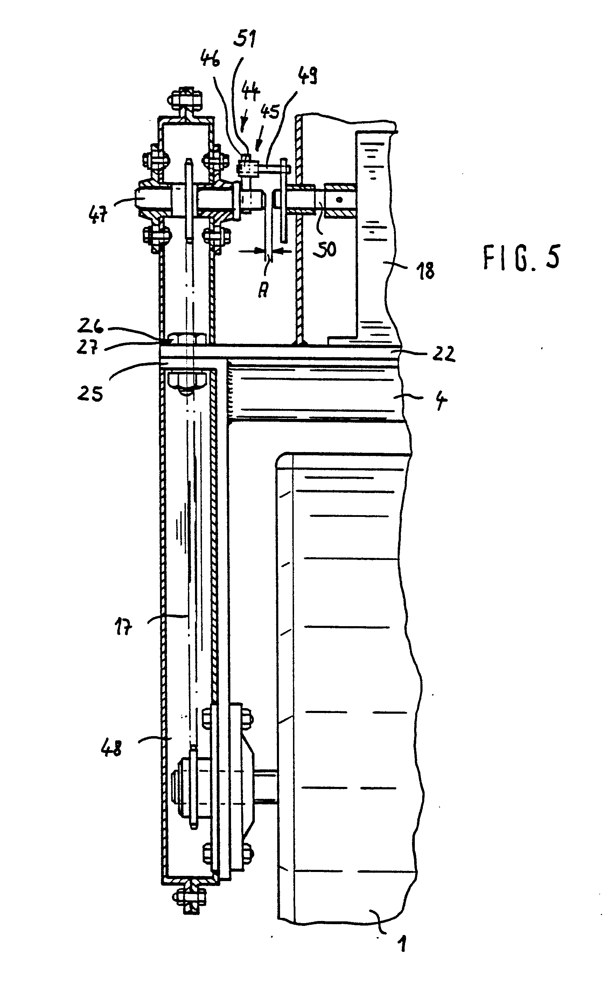

Fig. 5 die Antriebseinrichtung zwischen der Bodenwalze und der Bestellmaschine in Teilansicht und in der Ansicht von vorne.

Die Bodenwalze 1 und die auf der Bodenwalze 1 aufgesattelte, als Drillmaschine 2 ausgebildete Bestellmaschine bilden die landwirtschaftliche Gerätekombination 3. An dem Rahmen 4 der Bodenwalze 1 befinden sich die Dreipunktkupplungselemente 5. Über diese Dreipunktkupplungselemente 5 läßt sich die landwirtschaftliche Gerätekombination 3 mit den Tragarmen 6 und der Kupplungsvorrichtung 7 mit dem Bodenbearbeitungsgerät 8 verbinden. Durch das Hintereinanderanordnen des mit den Bodenbearbeitungswerkzeugen 9 ausgerüsteten Bodenbearbeitungsgerätes 8 und der landwirtschaftlichen Gerätekombination 3 entsteht die Bestellkombination 10.

Die Bodenwalze 1 bildet hierbei das Laufwerk für die Drillmaschine 2. Diese Drillmaschine 2 weist den Vorratsbehälter 11 auf, der im wesentlichen dicht oberhalb der Bodenwalze 1 angeordnet ist. Hinter der Bodenwalze 1 ist über den Tragrahmen 12 die Scharhalteschiene 13 befestigt, an der in zwei hintereinanderliegenden Querreihen die Säschare 14 angelenkt sind, die das von den Dosierelementen 15 der Drillmaschine 2 dosierte Saatgut in den Boden 16 ablegen. Die Dosierelemente 15 der Drillmaschine 2 werden über den Kettentrieb 17 über das stufenlos einstellbare Regelgetriebe 18 von der Bodenwalze 1 angetrieben. Der Tragrahmen 12 weist in seinen beiden äußeren Bereichen jeweils den nach oben ragenden Haltearm 19 auf, der an seinem oberen Ende 20 jeweils über die als Bolzenkupplung ausgebildete· Schnellkupplung 21 mit dem Rahmen 22 der Drillmaschine 2 und an seinem unteren Ende 23 jeweils über die ebenfalls als Bolzenkupplung ausgebildete Schnellkupplung 24 mit dem Rahmen 25 der Bodenwalze 1 kuppelbar ist. Über die leicht lösbaren, als Schraubverbindungen 26 ausgebildeten Kuppelelemente 27 wird der Rahmen 22 der als Drillmaschine ausgebildeten Bestellmaschine 2 mit dem Rahmen 25 der Bodenwalze 1 verbunden.  ··

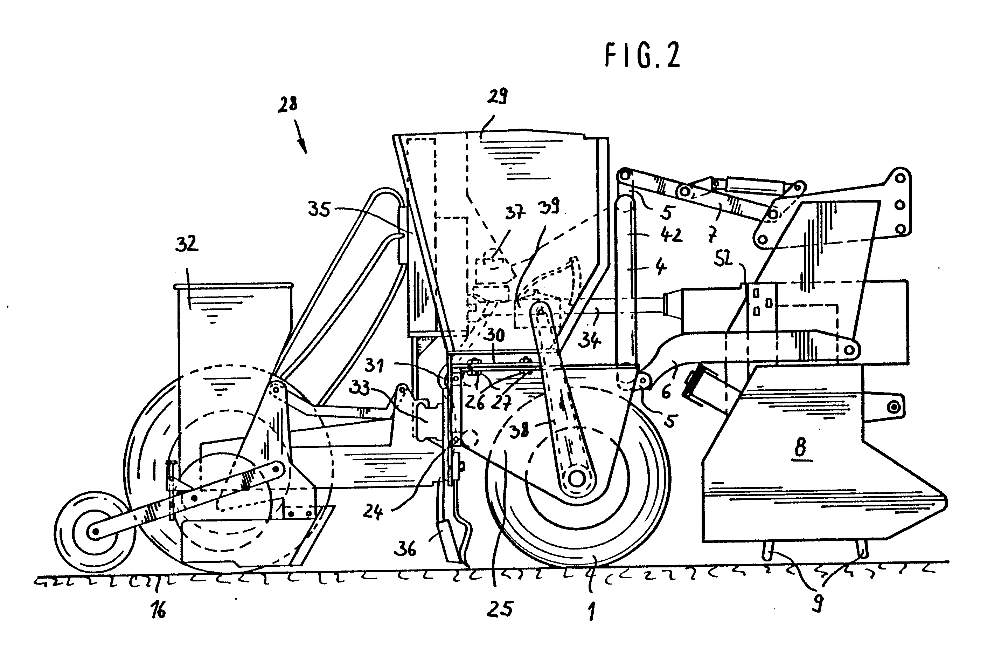

Die Fig. 2 zeigt die über die Tragarme 6 und der Kupplungsvorrichtung 7 mit dem Bodenbearbeitungsgerät 8 verbundenen Bodenwalze 1, wobei die Drillmaschine 2 durch eine pneumatische Einzelkorndrillmaschine 28 ersetzt worden ist. Über die als Schraubverbindungen 26 ausgebildeten Kuppelelemente 27 wird der den Düngervorratsbehälter 29 aufnehmende Rahmen 30 mit dem Rahmen 25 der Bodenwalze 1 verbunden. Über die als Bolzenkupplungen ausgebildeten Schnellkupplungen 24 und 31 wird der die einzelnen Einzelkornsäaggregate 32 tragende Hauptträger 33 mit der Bodenwalze 1 verbunden. Über die Gelenkwelle 34 wird das sich hinter dem Düngervorratsbehälter 29 befindliche Gebläse 35 angetrieben. Hinter der Bodenwalze 1 befinden sich die Düngerschare 36, denen sich die im Düngervorratsbehälter 29 befindlichen Düngemittel über die Dosierelemente 37 der Düngerstreueinrichtung in genau einstellbaren Mengen zugeführt wird. Die Dosierelemente 37 werden über den Kettentrieb 38 über das stufenlos einstellbare Regelgetriebe 39 von der Bodenwalze 1 angetrieben.

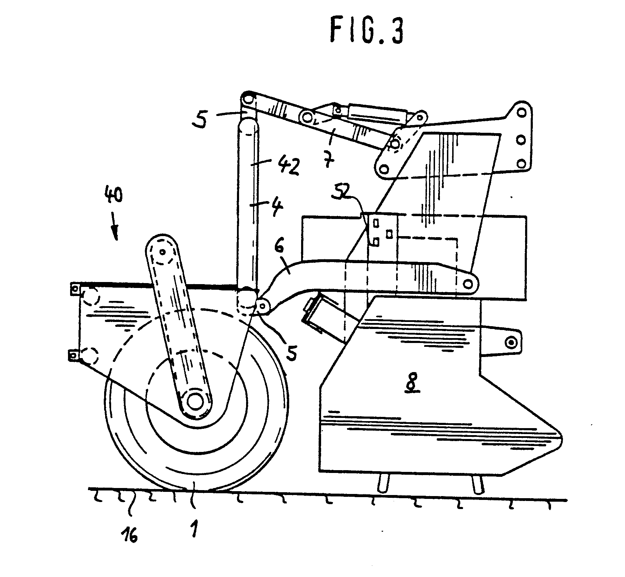

Die Fig. 3 zeigt das Bodenbearbeitungsgerät 8, das über die Tragarme 6 und die Kupplungsvorrichtung 7 mit den Dreipunktkupplungselementen 5 der Bodenwalze 1 verbunden ist. Hier wird die aus nebeneinander angeordneten Gummireifen bestehende Bodenwalze 1 als reine Nachlaufwalze 40 hinter dem Bodenbearbeitungsgerät 8 genutzt.

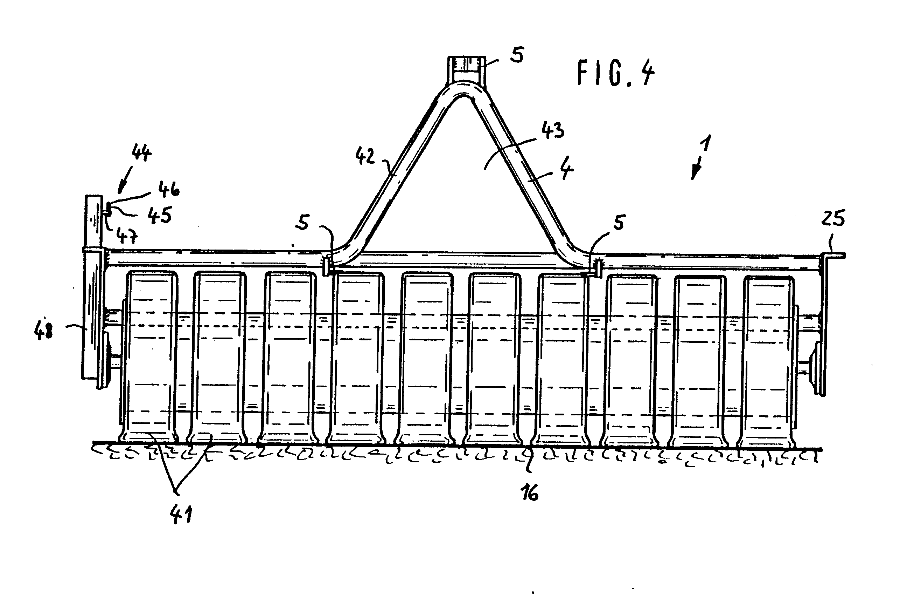

Die Fig. 4 zeigt die erfindungsgemäße Bodenwalze 1, die aus den nebeneinander angeordneten Reifen 41 besteht. Der Rahmen 4 der Bodenwalze 1 ist als Bügel 42 ausgebildet. Mit Hilfe der an dem Bügel 42 angeordneten Dreipunktkupplungselemente 5 läßt sich die Bodenwalze 1 mit dem Dreipunktkrafheber des die Walze tragenden Schleppers oder mit einem Bodenbearbeitungsgerät verbinden. Durch die Ausbildung des Rahmens 4 der Bodenwalze 1 als Bügel 42 wird genügend Freiraum 43 für ein über die Schlepperzapfwelle anzutreibendes Element der auf der Bodenwalze 1 aufgebauten Bestellmaschine geschaffen.

Nach dem Lösen der als Schraubverbindung 26 ausgebildete Kupplungselemente 27 und der dazugehörigen Schnellkupplungen 21, 24 und 31 läßt sich die jeweils auf der Bodenwalze 1 angeordnete Bestellmaschine 2 bzw. 28 vom Rahmen 25 der Bodenwalze 1 entfernen. Hierbei sind keine Vorrichtungen für den Antrieb der jeweiligen Regelgetriebe 18 bzw. 39 jeweils auf der Bodenwalze 1 angeordneten Bestellmaschine zu lösen, da die zwischen der Bodenwalze 1 und der jeweiligen Bestellmaschine angeordnete Antriebseinrichtung 44 als eine Kupplungsungenauigkeiten ausgleichende Schnellkupplung 45 ausgebildet ist. Diese Schnellkupplung 45 besteht aus einem Mitnahmestift 46 der an der Abtriebswelle 47 des Bodenwalzenantriebes 48 angeordnet ist. Dieser Mitnahmestift 46 wirkt mit dem Antriebsstift 49 der Antriebswelle 50 des regelbaren Antriebes 18, 39 der jeweiligen Bestellmaschine 2, 28 zusammen. Hierbei sind die Abtriebswelle 47 und die Antriebswelle 50 in einem Abstand A stirnseitig voneinander und mit ihren Drehachsen fluchtend im aufgebauten Zustand der Bestellmaschine auf der Bodenwalze angeordnet. Der Antriebsstift 49 weist im Bereich des Mitnahmestiftes 46 eine drehbar gelagerte Hülse 51 auf, an der der Mitnahmestift 46 zur Anlage kommt. Während der Rotation der Bodenwalze 1 reibt der Mitnahmestift 46 der Abtriebswelle 47 über den Antriebsstift 39 der Antriebswelle 50 die Antriebswelle des regelbaren Antriebes der Dosierorgane an. Beim Abbau der jeweiligen, auf der Bodenwalze 1 angeordneten Bestellmaschine ist es also ohne Lösen irgendwelcher Vorrichtungen für den Antrieb möglich, diese Bestellmaschine nach Lösen der entsprechenden Kuppelelemente 27 und der entsprechenden Schnellkupplungen 21, 24 oder 31 vom Rahmen der Bodenwalze 1 abzunehmen.

Mit in die Erfindung eingeschlossen werden soll, daß die Bodenbearbeitungsmaschine 8 auf ihrer Rückseite Dreipunktkupplungselemente mit einer Höhen-und/oder Tiefeneinstelleinrichtung 52 zur Ankoppelung der Bodenwalze 1 aufweist. Mit dieser Höhen-und/oder Tiefeneinstelleinrichtung 52 läßt sich die Arbeitstiefe der Bodenbearbeitungswerkzeuge 9 einstellen.

## Ansprüche

1. Landwirtschaftliche Gerätekombination, bestehend aus einer Bodenwalze und einer auf der Bodenwalze aufgesattelten Bestellmaschine, wobei die Dosierorgane der Bestellmaschine vorzugsweise von der Bodenwalze über einen regelbaren Antrieb angetrieben werden, dadurch gekennzeichnet, daß die Bestellmaschine (2,28) mittels leicht lösbarer Kuppelelemente (26,27) abnehmbar auf der Bodenwalze (1) angeordnet ist.

2. Gerätekombination nach Anspruch 1, dadurch gekennzeichnet, daß auf der Bodenwalze (1) mittels leicht lösbarer Kuppelelemente (26,27) Bestellmaschinen verschiedener Bauart, wie mechanische Getreidesämaschine, Einzelkorndrillmaschine, Kartoffellegemaschine oder pneumatische Getreidesämaschine, etc. anzuordnen sind.

3. Gerätekombination nach Anspruch 1, dadurch gekennzeichnet, daß die Bodenwalze (1) einen Rahmen (4,42) mit einer Dreipunktkupplung (5) aufweist.

4. Gerätekombination nach Anspruch 3, dadurch gekennzeichnet, daß die Bodenwalze (1) mittels der Dreipunktkupplung (5) sowohl an den Dreipunktkraftheber eines Ackerschleppers wie auch hinter einem Bodenbearbeitungsgerät (8), vorzugsweise einer schlepperzapfwellenangetriebenen Bodenbearbeitungsmaschine ankuppelbar ist.

5. Gerätekombination nach Anspruch 4, dadurch gekennzeichnet, daß die Bodenbearbeitungsmaschine (8) auf ihrer Rückseite Dreipunktkupplungselemente mit einer Höhen-und/oder Tiefeneinstelleinrichtung (52) zur Ankuppelung der Bodenwalze (1) aufweist.

6. Gerätekombination nach Anspruch 2 und 3, dadurch gekennzeichnet, daß der Rahmen (4,42) der Bodenwalze (1) einen Freiraum (43) für die Durchführung einer Gelenkwelle (34) für ein über die Schlepperzapfwelle anzutreibendes Element, wie das Gebläse (35), etc. der auf der Bodenwalze (1) aufgebauten Bestellmaschine (39), aufweist.

7. Gerätekombination nach Anspruch 1, dadurch gekennzeichnet, daß in der Antriebseinrichtung (44) zwischen der Bodenwalze (1) und der Bestellmaschine (2,39) eine Kupplungsungenauigkeiten ausgleichende Schnellkupplung (45) angeordnet ist.

8. Gerätekombination nach Anspruch 7, dadurch gekennzeichnet, daß diese Schnellkupplung (45) aus zumindest einem Mitnahmestift (46) an der Abtriebswelle (47) des Bodenwalzenantriebes (48) und zumindest einen Antriebsstift (49) auf der Antriebswelle (50) des regelbaren Antriebes (18,39) der Dosierorgane (15,37) der Bestellmaschine (2,39) besteht.

9. Gerätekombination nach Anspruch 8, dadurch gekennzeichnet, daß die Abtriebswelle (47) und die Antriebswelle (50) in einem Abstand (A) stirnseitig voneinander und mit ihren Drehachsen zumindest annähernd fluchtend im aufgebauten Zustand der Bestellmaschine (2,28) auf der Bodenwalze (1) angeordnet sind.

10. Gerätekombination nach Anspruch 8 und 9, dadurch gekennzeichnet, daß der Mitnahmestift (46) der Abtriebswelle (47) über den Antriebsstift (49) der Antriebswelle (50) die Antriebswelle des regelbaren Antriebes (18,39) der Dosierorgane (15,37) antreibt.

11. Gerätekombination nach Anspruch 8, dadurch gekennzeichnet, daß auf dem Antriebsstift (49) im Bereich des Mitnahmestiftes (46) eine drehbar gelagerte Hülse (51) angeordnet ist, an der der Mitnahmestift (46) zur Anlage kommt.

12. Gerätekombination nach Anspruch 1, dadurch gekennzeichnet, daß hinter der Bodenwalze (1) über eine Schnellkupplung (21,24,31) Tragrahmen (12) mit Materialausbringelementen, wie beispielsweise Säschare verschiedener Bauart, Düngerschare etc. leicht lös-und kuppelbar angeordnet ist.

13. Gerätekombination nach Anspruch 12, dadurch gekennzeichnet, daß der Tragrahmen (12) in seinen beiden äußeren Bereichen jeweils einen nach oben ragenden Haltearm (14) aufweist, der an seinem oberen Ende (20) jeweils über eine Schnellkupplung (21,31) mit dem Rahmen (22,29) der betreffenden Bestellmaschine(2,28) und an seinem unteren Ende (23) jeweils über eine Schnellkupplung (24) mit dem Rahmen (25) der Bodenwalze (1) kuppelbar ist.

14. Gerätekombination nach Anspruch 13, dadurch gekennzeichnet, daß die Schnellkupplungen (21,24,31) als Bolzenkupplungen (26) ausgebildet sind.

FIG.1

0 264 621

FIG.2

## FIG.3

Amazonen - Werke H. Dreyer GmbH & Co. KG

FIG. 4

0 264 621

FIG. 5

Amazonen - Werke H. Dreyer GmbH & Co. KG

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 088 083 (VAN DER LELY) * Zusammenfassung; Spalte 4, Zeilen 10-15; Abbildungen 3-5 * | 1,2 | A 01 B 49/06 |
| A | | 14 | |
| | --- | | |
| X | FR-A-2 342 633 (CRETE GUERIN) * Seite 1, Zeilen 9-19; Ansprüche 1,2 * | 1 | |
| A | | 7 | |
| | --- | | |
| A | FR-A-2 536 948 (VAN DER LELY) * Seite 1; Seite 3, Zeilen 17-35; Abbildungen 1,2 * | 1,3-6 | |
| | --- | | |
| A | FR-A-2 414 856 (NIEMEYER) * Insgesamt * | 1,2,12, 13 | |
| | --- | | |
| A | AU-B- 14 171 (MASSEY-FERGUSON)(A.D. 1966) * Anspruch 1; Abbildungen 1-6 * | 7-10 | |
| | --- | | |
| A | DE-A-3 438 011 (AMAZONEN) | | RECHERCHIERTE SACHGEBIETE (Int. Cl.4) |
| | --- | | |
| A | US-A-4 509 438 (RAU) | | A 01 B |
| | --- | | A 01 C |
| A,D | DE-A-3 105 641 (DREYER) | | F 16 D |
| | --- | | |
| A,D | DE-A-2 001 062 (BÖHM) | | |
| | --- | | |
| A | FR-A-2 499 815 (AMAZONEN) | | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 12-01-1988 | VON ARX V.U. |